# EUROPEAN PATENT APPLICATION

(11) **EP 2 757 392 A1**
(43) Date of publication of application: **23.07.2014**
(21) Application number: 14150976.0
(22) Date of filing: 13.01.2014
(51) Int. Cl.: G01V 1/38

(54) **Towed Streamer Acquisition with Variable Spatial Resolution**

(30) Priority: 16.01.2013 FR 1350380
(71) Applicant: CGG Services SA, 91300 Massy (FR)
(72) Inventor: Siliqi, Risto, 91300 Massy (FR)
(74) Representative: Regimbeau

(57) **Abstract**

Methods and systems for performing a single pass multi-density seismic acquisition are described. A single pass multi-density seismic acquisition includes a plurality of different length streamers towed by one or more streamer vessels. The different length streamers are configured to provide different streamer (receiver) density zones from a highest density to lowest density from the least offset to the greatest offset of the streamers. The different density zones provide for optimized data associated with multiples rejection, imaging and model building/full waveform inversion.

## Description

### TECHNICAL FIELD

Embodiments of the subject matter disclosed herein generally relate to methods and systems for marine seismic data acquisition and, more particularly, to mechanisms and techniques for improved data density measurement in marine seismic data acquisition.

### BACKGROUND

Marine seismic data acquisition and processing techniques are used to generate a profile (image) of a geophysical structure (subsurface) under the seafloor. This profile does not necessarily provide an accurate location for oil and gas reservoirs, but it may suggest, to those trained in the field, the presence or absence of oil and/or gas reservoirs. Thus, providing better image of the subsurface is an ongoing process.

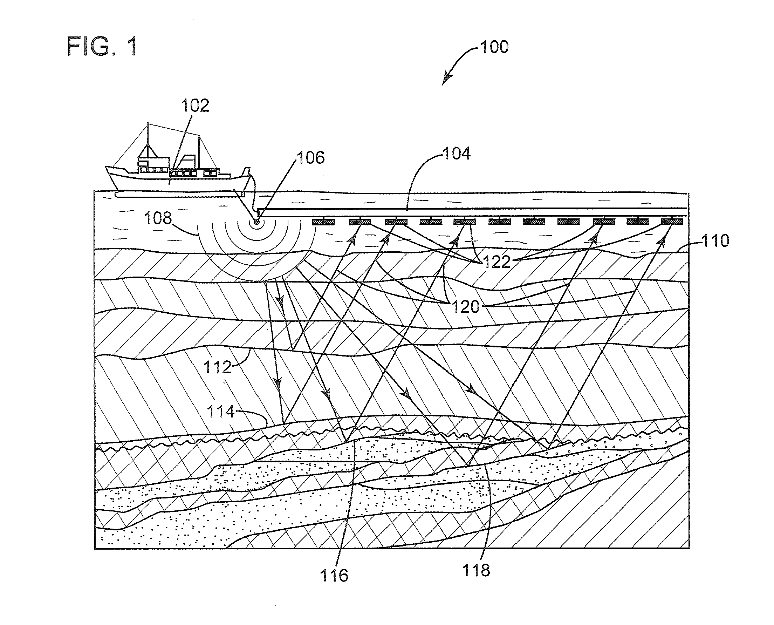

For a seismic gathering process, as shown in Figure 1, a marine seismic data acquisition system 100 includes a survey ship 102 towing a plurality of streamers 104 (one shown) that may extend over kilometers behind the vessel. It should be noted that for a single survey ship102 system, the limit of towed streamers 104 is approximately ten. One or more source arrays 106 may be also towed by the survey ship 102 or another survey ship (not shown) for generating seismic waves 108. Conventionally, the source arrays 106 are placed in front of the streamers 104, considering a traveling direction of the survey ship 102. The seismic waves 108 generated by the source arrays 106 propagate downward and penetrate the seafloor 110, eventually being reflected, by a reflecting structure 112, 114, 116, 118 at an interface between different layers of the subsurface, back to the surface. The reflected seismic waves 120 propagate upwardly and are detected by detectors 122 provided on the streamers 104. This process is generally referred to as "shooting" a particular seafloor 110 area, which area is referred to as a "cell."

One of the shortcomings of the existing technology relates to the uniform density of the data collection points, i.e., detectors 122, positioned along the equal length streamers and the number of streamers 104 in the attached to the survey ship 102. Generally, a single survey ship 102 tows approximately ten to twelve streamers 104, of uniform length, with detectors 122 equally spaced along the length of each streamer. In this configuration, the density of the collection points is equally distributed around the area covered by the streamers 104. The uniform density configuration leads to problems associated with multiple (reflective) removal at locations on the streamers in close proximity to the source arrays 108, i.e., it is desirable to have a greater density of detectors 122 at the front of the streamers. Further, the volume of data collected as you progress from the front of the streamers 104 to the back of the streamers 104 remains constant when acceptable results are available with fewer detectors 122 as you progress from the front of the streamers 104 to the rear of the streamers 104. It should be noted that a survey ship is limited in the number of streamers 104 it can tow, regardless of the length of the streamers 104, i.e., adjusting the length of a portion of the streamers 104 to vary the detector 122 density does not result in the ability to tow a greater number of streamers 104.

Another shortcoming associated with existing acquisition methods relate to the collected data in relation to the intended use of the collected data, i.e., different streamer collection configurations lend themselves to different uses of the data such as multiple removal, imaging and model building. Uniform density streamer configurations are not focused on a specific use of the collected data resulting in less than optimal seismic image results.

Accordingly, it would be desirable to provide systems and methods that avoid the afore-described problems and drawbacks, and improve the accuracy of the final image.

### SUMMARY

According to an exemplary embodiment, a method of performing a plurality of seismic data acquisitions in a single pass comprises configuring a plurality of different length streamers such that a plurality of same length short streamers separates any two streamers adjacent to said plurality of same length short streamers and longer than said plurality of same length short streamers; connecting said plurality of different length streamers to one or more streamer vessels; and towing said plurality of different length streamers across a predefined area for seismic data collection.

According to another exemplary embodiment, a system for performing a plurality of seismic data acquisitions in a single pass comprises a plurality of streamers wherein said plurality of streamers are comprised of a plurality of different length groups and said plurality of streamers are configured such that a plurality of shortest length streamers are disposed between any two non-shortest length adjacent streamers; and a streamer vessel for towing said plurality of streamers across a predetermined area for seismic data collection.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is an illustration associated with background art marine seismic data acquisition system;
Figure 2 is a schematic diagram of a novel seismic data acquisition system according to an exemplary embodiment wherein a dual-density variable spatial resolution is based on variable length streamers and a single tow vessel;
Figure 3 is a schematic diagram of a novel seismic data acquisition system according to an exemplary embodiment wherein a tri-density variable spatial resolution is based on variable length streamers and a single tow vessel;
Figure 4 is a schematic diagram of a novel seismic data acquisition system according to an exemplary embodiment wherein a dual-density variable spatial resolution is based on variable length streamers and a plurality of tow vessels;
Figure 5 is a schematic diagram of a novel seismic data acquisition system according to an exemplary embodiment wherein a tri-density variable spatial resolution is based on variable length streamers and a plurality of tow vessels;
Figure 6 is a schematic diagram of a novel seismic data acquisition system according to an exemplary embodiment wherein a dual-density variable spatial resolution is based on variable length streamers and a plurality of tow vessels;
Figure 7 is a schematic diagram of a novel seismic data acquisition system according to an exemplary embodiment wherein a tri-density variable spatial resolution is based on variable length streamers and a plurality of tow vessels; and
Figure 8 is a flowchart of a method for performing a single pass dual- or tri-acquisition of seismic data based on groups of different length streamers and one or more streamer vessels.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of towed streamer acquisition using one or more streamer vessels and a plurality of streamers and sources. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In order to provide a context for the subsequent exemplary embodiments, a description of aspects and terminology is hereby included. It should be noted in an exemplary embodiment that an individual source can be, for example, an air gun. In another aspect of an exemplary embodiment, objects named birds can be located on the one or more lines connected to the one or more streamer vessels for maintaining the streamers in the desired positions. Continuing with an exemplary embodiment, the birds are devices capable of maintaining a cross-line position or a depth position. In another aspect of an exemplary embodiment, a coordinate system for describing the direction of travel of the different vessels can be related to an X-axis, Y-axis system wherein the X-axis is the direction of travel of the vessels or in-line direction and the Y-axis, also known as the cross-line direction, is perpendicular to the X-axis direction.

Continuing with the general context description of an exemplary embodiment, the individual sources can be fired based on various schemes. One scheme in an exemplary embodiment can shoot the sources sequentially in a denser pattern. For example, fire the sources at 12.5 meter intervals, i.e., shoot a first front source, wait for the first source to travel 12.5 meters along the X-axis, then shoot the central source and so on. It should be noted in the exemplary embodiment that the value of 12.5 meters is an example and can vary, e.g., based on the speed of the streamer vessel. In this fashion, the sources are fired when, for example, they have the same X-axis, or in-line, position during a firing sequence.

It should further be noted in the exemplary embodiment that a firing sequence includes the sequential one-time firing of each source. In another exemplary embodiment firing sequence, the sources are fired either simultaneously or almost simultaneously with random time delays between firings. It should be noted in the exemplary embodiment that for a twenty kilometer offset the tail sources must be shot until the end of the full-fold boundary. Further, it should be noted in an exemplary embodiment that a large offset between a source and a traveling distance is considered by the industry to be equal to or larger than two thousand meters.

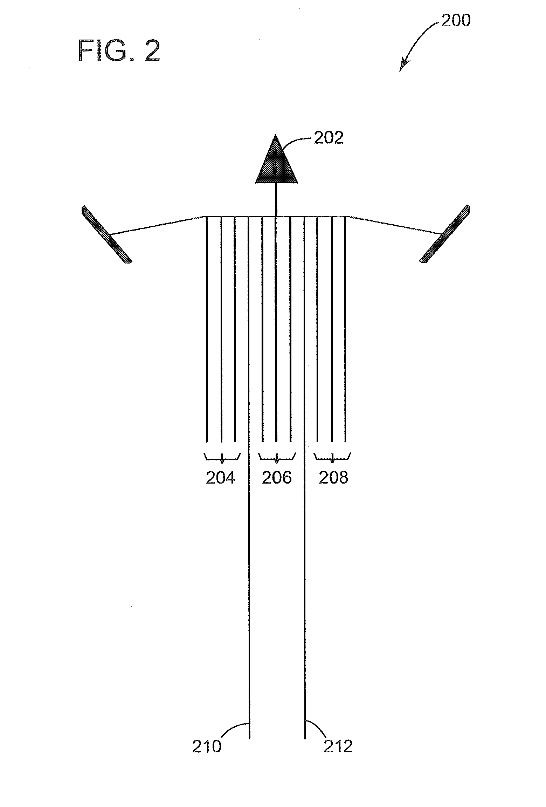

Looking now to Figure 2, an exemplary embodiment of a dual-acquisition streamer configuration 200 is depicted. The exemplary embodiment dual-acquisition streamer configuration 200 comprises a streamer vessel 202, three groups of three short streamers 204, 206, 208 and two long streamers 210, 212. Continuing with the exemplary embodiment, each long streamer is adjacent to two groups of short streamers, i.e., long streamer 210 is adjacent to short streamer group 204 and short streamer group 206 and long streamer 212 is adjacent to short streamer group 206 and short streamer group 208. It should be noted in the exemplary embodiment that a dual-acquisition streamer configuration 200 provides for a dual-acquisition based on the dual density of the streamers. It should further be noted in the exemplary embodiment that the number of short streamers in a group and the number of long streamers in a group can vary based on the requirements of the seismic survey.

Continuing with the exemplary embodiment, the receiver density is greater at near offsets based on the greater number of short streamers 204, 206, 208 compared to the long streamers 210, 212. It should be noted in the exemplary embodiment that the Surface Related Multiple Elimination (SRME) is improved by the greater density at near offsets while the presence of the long offsets provide for improved full waveform inversion. In summary of the exemplary embodiment, the dual-acquisition streamer configuration 200 provides a dual-acquisition for a single-pass of the streamer vessel 202 with the collection of greater density near-offset data for multiples elimination and long offset data for full waveform inversion within the towing constraints of a single streamer vessel 202.

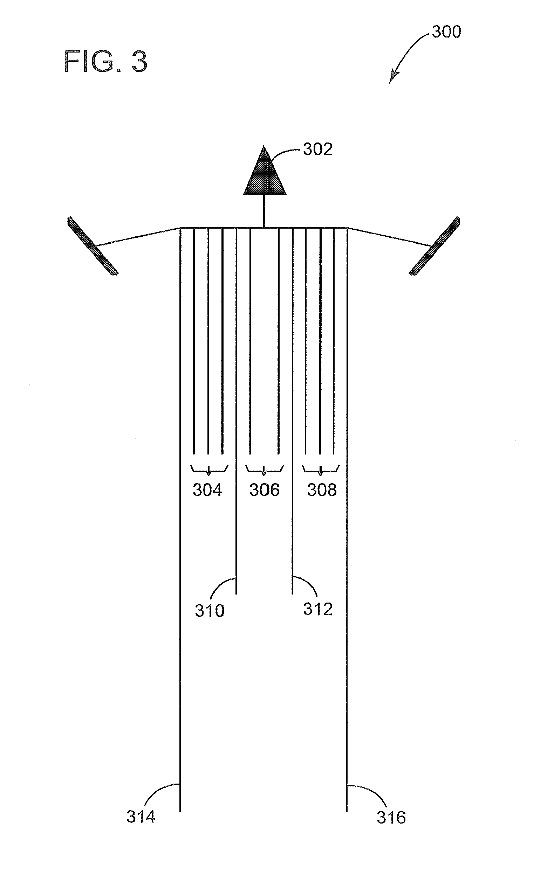

Looking now to Figure 3, an exemplary embodiment of a tri-acquisition streamer configuration 300 is depicted. The exemplary embodiment tri-acquisition streamer configuration 300 comprises a streamer vessel 302, three groups of short streamers 304, 306, 308, two medium streamers 310, 312 and two long streamers 314, 316. It should be noted in the exemplary embodiment that the number of short streamers in a short streamer group 304, 306, 308 can vary based on the requirements of the seismic survey or the physical limitations of the streamer vessel 302. Similarly, the number of medium streamers 310, 312 and long streamers 314, 316 can vary based on the requirements of the seismic survey or the physical limitations of the streamer vessel 302.

Continuing with the exemplary embodiment, groups of short streamers 304, 306, 308 are configured between any combination of the two medium streamers 310, 312 or the long streamers 314, 316. It should be noted in the exemplary embodiment that this configuration provides for a tri-density streamer configuration. Next in the exemplary embodiment, a first, and greatest, density of receivers occurs from the smallest offset from the streamer vessel 302 to the offset location at the end of the groups of short streamers 304, 306, 308. Continuing in the exemplary embodiment, the second greatest density of receivers occurs from the offset at the end of the groups of short streamers 304, 306, 308 to the end of the medium streamers 310, 312. Next in the exemplary embodiment, the third greatest density of receivers occurs from the offset at the end of the medium streamers 310, 312 to the offset at the end of the long streamers 314, 316. It should be noted in the exemplary embodiment that the lengths of the individual streamers for the groups of short streamers 304, 306, 308, the medium streamers 310, 312 and the long streamers 314, 316 can vary based on the requirements of the seismic acquisition and the streamer vessel 302. It should further be noted in the exemplary embodiment that the tri-acquisition configuration greatest density of receivers collects data for multiples removal, the second greatest density of receivers collects data for imaging and the third greatest density of receivers collects data for model building and improving full waveform inversion.

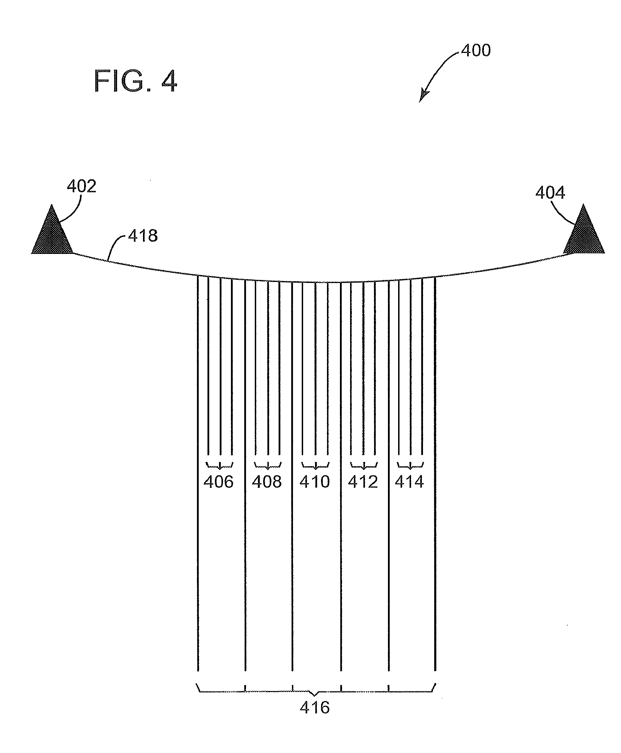

Looking now to Figure 4, another exemplary embodiment of a dual-acquisition system 400 is depicted. The exemplary embodiment dual-acquisition system 400 comprises a first streamer vessel 402, a second streamer vessel 404, a plurality of groups of short streamers 406, 408, 410, 412, 414, a group of long streamers 416 and a tow line 418 connecting the first streamer vessel 402, the second streamer vessel 404, the groups of short streamers 406, 408, 410, 412, 414 and the group of long streamers 416.

Continuing with the exemplary embodiment, a dual-acquisition system 400 is configured based on the positioning of the streamers and their associated receivers. It should be noted in the exemplary embodiment that at least one group of short streamers is positioned between each long streamer resulting in a greater density of receivers at shorter offsets in relation to the streamer vessels 402, 404. It should further be noted in the exemplary embodiment that a greater number of streamers, corresponding to a greater scan area and a greater near offset receiver density, is configurable based on the use of dual streamer vessels 402, 404 and the interconnected tow line 418 forming a catenary bridge between the two tow vessels 402, 404. Further in the exemplary embodiment as described above for figure 2, the dual-acquisition system provides targeted data densities for multiples removal in the near-offset high density are of the groups of short streamers 406, 408, 410, 412, 414 and imaging based on the receiver density in the group of long streamers 416 offset area beyond the groups of short streamers 406, 408, 410, 412, 414 area.

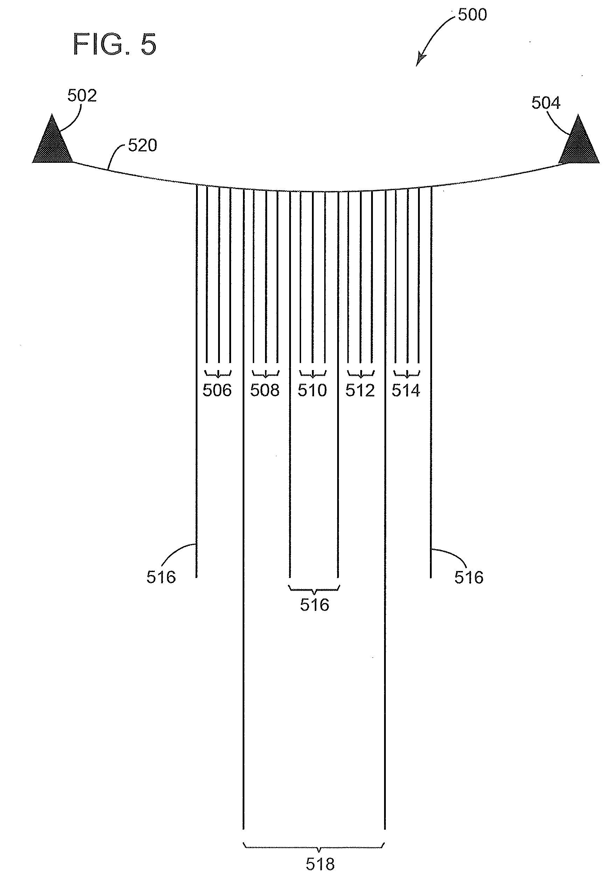

Looking now to Figure 5, another exemplary embodiment of a tri-acquisition system 500 is depicted. The exemplary embodiment tri-acquisition system 500 comprises a first streamer vessel 502, a second streamer vessel 504, a plurality of groups of short streamers 506, 508, 510, 512, 514, a plurality of groups of medium streamers 516, a group of long streamers 518 and a tow line 520 connecting the first streamer vessel 502, the second streamer vessel 504, the groups of short streamers 506, 508, 510, 512, 514, the groups of medium streamers 516 and the group of long streamers 518.

Continuing with the exemplary embodiment, groups of short streamers 506, 508, 510, 512, 514 are configured between any combination of medium streamers 516 or long streamers 518. It should be noted in the exemplary embodiment that this configuration provides for a tri-density streamer configuration. Next in the exemplary embodiment, a first, and greatest, density of receivers occurs from the smallest offset from the streamer vessel 502, 504 tow line 520 to the offset location at the end of the groups of short streamers 506, 508, 510, 512, 514. Continuing in the exemplary embodiment, the second greatest density of receivers occurs from the offset at the end of the groups of short streamers 506, 508, 510, 512, 514 to the end of the medium streamers 516. Next in the exemplary embodiment, the third greatest density of receivers occurs from the offset at the end of the medium streamers 516 to the offset at the end of the long streamers 518.

It should be noted in the exemplary embodiment that the lengths of the individual streamers for the groups of short streamers 506, 508, 510, 512, 514, the medium streamers 516 and the long streamers 518 can vary based on the requirements of the seismic acquisition and the streamer vessels 502, 504. It should further be noted in the exemplary embodiment that the tri-acquisition configuration greatest density of receivers collects data for multiples removal, wherein the second greatest density of receivers collects data for imaging and the third greatest density of receivers collects data for model building and improving full waveform inversion. In another aspect of the exemplary embodiment, the receiver density is increased based on the greater number of streamers supported by the use of dual streamer vessels 502, 504 and the associated tow line 520 resulting in a greater number of receivers and a larger area of coverage for each pass over the seismic survey location.

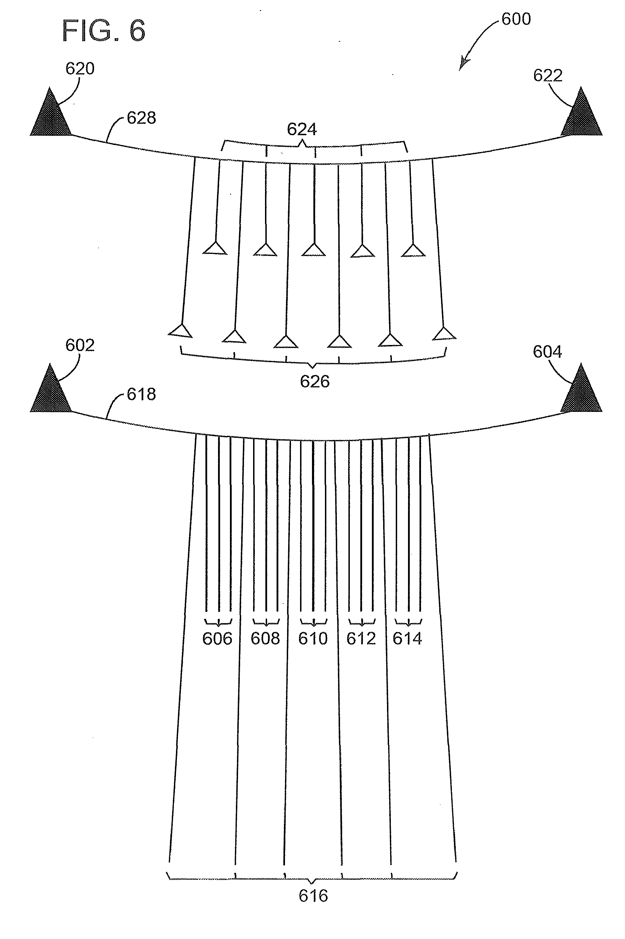

Looking now to Figure 6, another exemplary embodiment of a dual-acquisition system 600 is depicted. The exemplary embodiment dual-acquisition system 600 comprises a first streamer vessel 602, a second streamer vessel 604, a plurality of groups of short streamers 606, 608, 610, 612, 614, a group of long streamers 616, a first tow line 618 connecting the first streamer vessel 602, the second streamer vessel 604, the groups of short streamers 606, 608, 610, 612, 614 and the group of long streamers 616, a first source vessel 620, a second source vessel 622, a plurality of short line sources 624, a plurality of long line streamers 626 and a second tow line 628 connecting the first source vessel 620, the second source vessel 622, the plurality of short line sources 624 and the plurality of long line sources 626. It should be noted in the exemplary embodiment that the streamers 614, 616 are configured in a fan arrangement, i.e., the distance between the any two adjacent streamers is less at the near offset end than at the far offset end of the adjacent streamers and the distance between any two streamers or sources at the connection point on the tow line can be different. It should further be noted in the exemplary embodiment that the sources 624, 626 can be configured in a fan arrangement as previously described for the streamer fan arrangement.

Continuing with the exemplary embodiment, a dual-acquisition system 600 is configured based on the positioning of the streamers and their associated receivers. It should be noted in the exemplary embodiment that at least one group of short streamers is positioned between each long streamer resulting in a greater density of receivers at shorter offsets, in relation to the streamer vessels 602, 604. It should further be noted in the exemplary embodiment that a greater number of streamers, e.g., 50 or more, corresponding to a greater scan area and a greater near offset receiver density, is configurable based on the use of dual streamer vessels 602, 604 and the interconnected tow line 618 forming a catenary bridge between the two tow vessels 602, 604. Further in the exemplary embodiment, as described above for figure 2 and figure 4, the dual-acquisition system provides targeted data densities for multiples removal in the near-offset high density are of the groups of short streamers 606, 608, 610, 612, 614 and imaging based on the receiver density in the group of long streamers 616 offset area beyond the groups of short streamers 606, 608, 610, 612, 614 area.

Next in the exemplary embodiment, the dual-acquisition system 600 is further configured based on the positioning of seismic sources 624, 626. It should be noted in the exemplary embodiment that at least one group of short sources can be positioned between each long source resulting in variable angles of seismic wave interaction with the previously describe streamers and their associated receivers. It should further be noted that the sources 624, 626 can be fired at individual times, i.e., in a predefined sequence or all of the sources 624, 626 can be fired simultaneously. In another aspect of the exemplary embodiment and as similarly described for the streamers, the sources 624, 626 are connected to the tow line 628 in a catenary arrangement between the first source vessel 620 and the second source vessel 622.

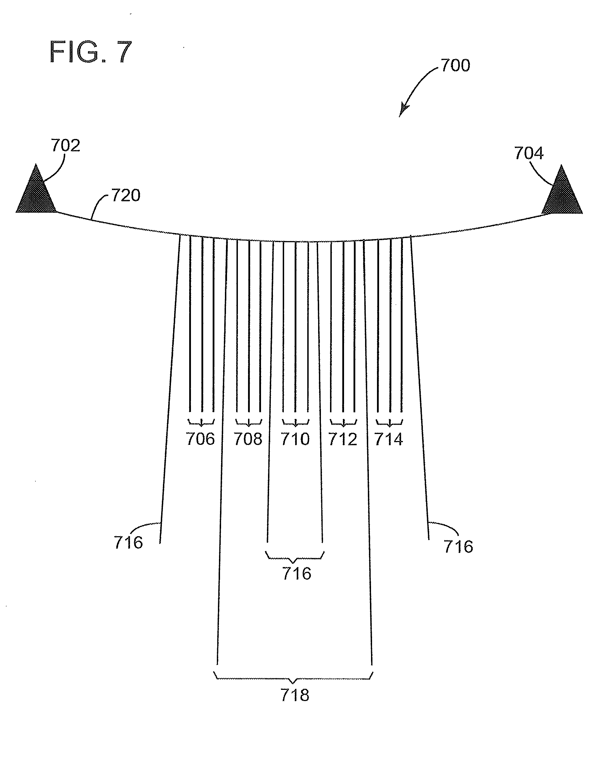

Looking now to Figure 7, another exemplary embodiment of a tri-acquisition system 700 is depicted. The exemplary embodiment tri-acquisition system 700 comprises a first streamer vessel 702, a second streamer vessel 704, a plurality of groups of short streamers 706, 708, 710, 712, 714, a plurality of groups of medium streamers 716, a group of long streamers 718 and a tow line 720 connecting the first streamer vessel 702, the second streamer vessel 704, the groups of short streamers 706, 708, 710, 712, 714, the groups of medium streamers 716 and the group of long streamers 718. It should be noted in the exemplary embodiment that the streamers are configured in a fan arrangement, i.e., the distance between the any tow adjacent streamers is less at the near offset end than at the far offset end of the adjacent streamers.

Continuing with the exemplary embodiment, groups of short streamers 706, 708, 710, 712, 714 are configured between any combination of medium streamers 716 or long streamers 718. It should be noted in the exemplary embodiment that this configuration provides for a tri-density streamer configuration. Next in the exemplary embodiment, a first, and greatest, density of receivers occurs from the smallest offset from the streamer vessel 702, 704 tow line 720 to the offset location at the end of the groups of short streamers 706, 708, 710, 712, 714. Continuing in the exemplary embodiment, the second greatest density of receivers occurs from the offset at the end of the groups of short streamers 706, 708, 710, 712, 714 to the end of the medium streamers 716. Next in the exemplary embodiment, the third greatest density of receivers occurs from the offset at the end of the medium streamers 716 to the offset at the end of the long streamers 718.

It should be noted in the exemplary embodiment that the lengths of the individual streamers for the groups of short streamers 706, 708, 710, 712, 714, the medium streamers 716 and the long streamers 718 can vary based on the requirements of the seismic acquisition and the streamer vessels 702, 704. It should further be noted in the exemplary embodiment that the tri-acquisition configuration greatest density of receivers collects data for multiples removal, wherein the second greatest density of receivers collects data for imaging and the third greatest density of receivers collects data for model building and improving full waveform inversion. In another aspect of the exemplary embodiment, the receiver density is increased based on the greater number of streamers supported by the use of dual streamer vessels 702, 704 and the associated tow line 720 resulting in a greater number of receivers and a larger area of coverage for each pass over the seismic survey location.

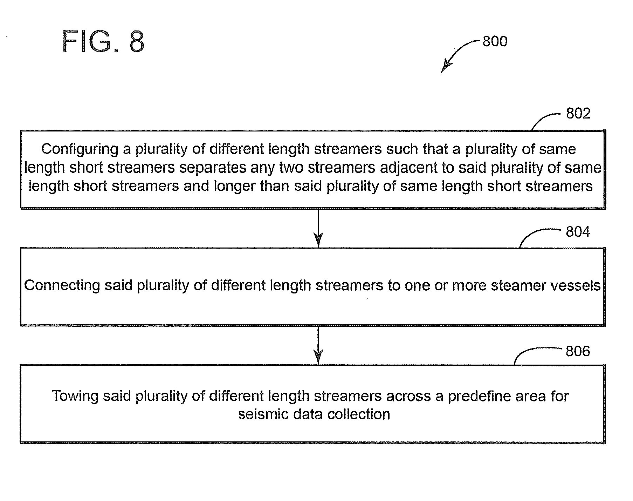

Looking now to Figure 8, an exemplary method embodiment for a seismic data dual- or tri-acquisition 800 is depicted. Beginning at step 802, the exemplary embodiment method configures a plurality of different length streamers. Next in the exemplary embodiment the streamers are disposed such that a plurality of the shortest streamers separates any tow longer length streamers adjacent to the plurality of shortest streamers. It should be noted in the exemplary embodiment that the combination of groups of shortest streamers between longer streamers creates an area of greatest streamer (receiver) density at the closest proximity to the streamer vessel, i.e., the shortest offset from the streamer vessel. Continuing with the exemplary embodiment, an area of lower streamer (receiver) density occurs after the end of the shortest streamers. It should be noted in the exemplary embodiment that if there are additional groups of streamers of different lengths then additional areas of different streamer (receiver) density are disposed in the plurality of streamers.

Next, at step 804, the exemplary embodiment method further configures a seismic data acquisition system by connecting the plurality of different length streamers to one or more streamer vessels. It should be noted in the exemplary embodiment that the use of additional streamer vessels provides for the configuration of a greater number of streamers and correspondingly a larger area of data collection. It should further be noted in the exemplary embodiment that if more than one streamer vessel is disposed then a catenary bridge is configured between the streamer vessels and the streamers are connected to the catenary bridge.

Next at step 806, the exemplary method embodiment continues by towing the seismic data acquisition system across a predetermined mapping area until the mapping area has been covered. Continuing with the exemplary method embodiment, each pass of the seismic data acquisition system is separated by a predetermined pass distance and a shot is fired by one of the plurality of source vessels at a predetermined shot point interval. It should be noted in the exemplary method embodiment that the pass distance and the shot point interval can vary between passes and between shots respectively.

The above-disclosed exemplary embodiments provide a system and a method for dual- or tri-density seismic data acquisition. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Among other variations and permutations associated with the foregoing embodiments, consider that although some of the foregoing embodiments illustrate the streamers being parallel to one another, such is not required. For example, in yet another exemplary embodiment as depicted in some of the embodiments, the streamers may be provided to have a dovetail-like (fan) arrangement. According to still another exemplary embodiment, the streamers may have a variable depth along as described, for example, in Patent Application Serial No. 13/272,428, entitled "Method and Device to Acquire Marine Seismic Data," and authored by R. Soubaras, the entire content of which is incorporated herein by reference. In one application, the streamers are fanned in a horizontal plane (substantially parallel to the water surface) so that they make an angle with each other. To achieve this arrangement, birds may be located on each streamer for maintaining the streamers at the desired positions. The birds are devices capable of maintaining a vertical and/or horizontal position in the water.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method of performing a plurality of seismic data acquisitions in a single pass, said method comprising:
configuring a plurality of different length streamers (406, 408, 410, 412, 414) (416) such that a plurality of same length short streamers (406, 408, 410, 412, 414) separates any two streamers (416) adjacent to said plurality of same length short streamers (406, 408, 410, 412, 414) and longer than said plurality of same length short streamers (406, 408, 410, 412, 414);
connecting said plurality of different length streamers (406, 408, 410, 412, 414) (416) to one or more streamer vessels (402) (404); and
towing said plurality of different length streamers (406, 408, 410, 412, 414) (416) across a predefined area (110) for seismic data collection.

2. The method of claim 1, wherein said streamers longer than said plurality of same length short streamers are of the same length and perform a dual-acquisition of seismic data.

3. The method of claim 2, wherein one of said plurality of seismic data acquisitions is associated with said plurality of same length short streamers and is for multiples removal.

4. The method of claim 2, wherein one of said plurality of seismic data acquisitions is associated with said streamers longer than said plurality of same length short streamers and is for imaging.

5. The method of either claim 3 or claim 4, wherein said towing is disposed by a single streamer vessel.

6. The method of either claim 3 or claim 4, wherein said towing is disposed by a first streamer vessel and a second streamer vessel connected by a catenary bridge.

7. The method of claim 1, wherein said streamers longer than said plurality of same length short streamers are of a first length and a second length, longer than said first length, and perform a tri-acquisition of seismic data.

8. The method of claim 7, wherein a first of said plurality of seismic data acquisitions is associated with said plurality of same length short streamers and is for multiples removal.

9. The method of claim 7, wherein one of said plurality of seismic data acquisitions is associated with said streamers of said first length and is for imaging.

10. The method of claim 7, wherein one of said plurality of seismic data acquisitions is associated with said streamers of said second length and is for model building and full waveform inversion.

11. A system for performing a plurality of seismic data acquisitions in a single pass, said system comprising:
a plurality of streamers (304, 306, 308, 310, 312, 314, 316) wherein said plurality of streamers (304, 306, 308, 310, 312, 314, 316) are comprised of a plurality of different length groups (304, 306, 308) (310, 312) (314, 316) and said plurality of streamers (304, 306, 308, 310, 312, 314, 316) are configured such that a plurality of shortest length streamers (304, 306, 308) are disposed between any two non-shortest length adjacent streamers (310, 312) (314, 316); and
a streamer vessel (302) for towing said plurality of streamers (304, 306, 308, 310, 312, 314, 316) across a predetermined area for seismic data collection (110).

12. The system of claim 11, further comprising a second streamer vessel and a catenary bridge connecting said streamer vessel, said second streamer vessel and said plurality of streamers.

13. The system of claim 12, further comprising a plurality of birds for steering said plurality of streamers into a fan configuration.

14. The system of claim 11, wherein said streamers are disposed with approximately a twenty-five meter separation.

15. The system of claim 13, wherein said streamers are disposed with approximately a twenty-five meter separation at a connection point on said catenary bridge.
